Europäisches Patentamt

European Patent Office

Office européen des brevets

(11) Numéro de publication: **0 276 602**
**A1**

(12) **DEMANDE DE BREVET EUROPEEN**

(21) Numéro de dépôt: 87402879.8

(22) Date de dépôt: 16.12.87

(51) Int. Cl.⁴: **B60R 13/06**

(30) Priorité: 19.12.86 FR 8617818

(43) Date de publication de la demande:
03.08.88 Bulletin 88/31

(84) Etats contractants désignés:
AT BE CH DE ES FR GB GR IT LI LU NL SE

(71) Demandeur: BOUSSOIS S.A.
126-130 rue Jules Guesde
F-92302 Levallois-Perret(FR)

(72) Inventeur: Hochart, Paul
5 rue des Usines
F-59770 La Longueville(FR)

(74) Mandataire: Bouju, André
Cabinet Bouju 38 avenue de la Grande Armée
F-75017 Paris(FR)

(54) **Vitrage prêt à sa pose et son procédé de fabrication et de fixation.**

(57) Le vitrage (1) porte sur sa périphérie un cordon de collage (2) en matière plastique thermofusible renfermant un insert métallique (3) permettant le chauffage par effet Joule de ce cordon, ce dernier permettant la fixation du vitrage sur un cadre rigide (4).

Le cordon de collage (2) en matière plastique thermofusible recouvre à la fois la face interne (1a) et le bord extérieur (1b) du vitrage. Ce cordon (2) est préformé de façon qu'au moins la partie (2a) dudit cordon qui recouvre le bord extérieur (1b) du vitrage, remplisse lors de la pose de celui-ci dans le cadre rigide (4) sensiblement tout l'espace compris entre le bord extérieur (1b) du vitrage et ce cadre rigide (4).

Utilisation pour faciliter la fabrication et la pose des vitrages tels que pare-brise et lunettes arrières d'automobiles.

FIG.1

## "Vitrage prêt à sa pose et son procédé de fabrication et de fixation"

La présente invention concerne un vitrage et en particulier un pare-brise ou une lunette arrière d'automobile portant sur sa périphérie un joint en matière plastique thermofusible, ce vitrage muni de son joint étant prêt à être posé dans un cadre rigide.

Dans le brevet français n° 2 547 345 de la demanderesse, on a décrit un vitrage prêt à la pose comprenant à sa périphérie un joint de finition en matière plastique souple destiné à remplir complètement l'espace compris entre la périphérie du vitrage et le cadre rigide qui entoure par exemple la baie d'une automobile.

Contre la face intérieure de ce joint de finition et contre la face intérieure du vitrage est appliqué un cordon en matière plastique thermofusible destiné au collage du vitrage au cadre rigide.

Ce cordon en matière plastique thermofusible est également relié au joint de finition en matière plastique non thermofusible par un insert métallique destiné à être relié à une source de courant électrique pour permettre le chauffage par effet Joule du cordon en matière thermofusible et assurer ainsi la fixation par collage du vitrage au cadre rigide.

Le joint de finition en matière plastique peut comporter une gorge en U permettant d'emboîter ce joint sur la périphérie du vitrage.

Le joint de finition en matière plastique peut également être collé sur la périphérie du vitrage. Cette opération est délicate car elle implique le grattage préalable du joint en matière plastique pour obtenir une adhérence suffisante de la colle. Par ailleurs, la colle utilisée à cet effet doit être compatible avec le chauffage ultérieur par effet joule destiné au collage proprement dit du cordon en matière thermofusible.

Néanmoins, malgré les précautions prises, la liaison entre le joint de finition et le vitrage n'est jamais satisfaisante.

Par ailleurs, les réalisations connues ci-dessus sont onéreuses, compte tenu de la nature des matériaux utilisés et de la complexité des opérations mises en oeuvre pour leur fabrication.

Le but de la présente invention est de remédier aux inconvénients de la réalisation précitée, en créant un vitrage prêt à la pose qui soit de structure simple, de fabrication peu onéreuse et qui permette une pose et un collage faciles du vitrage sur un cadre rigide.

Suivant l'invention, ce vitrage portant sur sa périphérie un cordon de collage en matière plastique thermofusible permettant la fixation du vitrage sur un cadre rigide est caractérisé en ce que le cordon de collage en matière plastique thermofusible recouvre à la fois la face interne et le bord extérieur du vitrage et en ce que ce cordon est préformé de façon qu'au moins la partie dudit cordon qui recouvre le bord extérieur du vitrage, remplisse lors de la pose de celui-ci dans le cadre rigide, sensiblement tout l'espace compris entre le bord extérieur du vitrage et le cadre rigide.

Ainsi, lorsque le vitrage muni à sa périphérie de son cordon de collage est posé dans le cadre rigide, la partie de ce cordon qui recouvre le bord extérieur du vitrage remplit tout l'espace compris entre le bord extérieur du vitrage et le cadre rigide. De ce fait, l'utilisation d'un joint de finition relié au cordon de collage proprement dit devient inutile, de sorte que les inconvénients liés à l'utilisation de ce joint de finition sont évités.

Par conséquent, le cordon de collage préformé remplit une double fonction, à savoir celle du joint de finition de la réalisation antérieure et la fonction de collage.

De plus, la fixation de ce cordon de collage au bord du vitrage ne nécessite aucune opération délicate de collage. En effet, cette fixation du cordon au vitrage peut être réalisée simplement par emboîtement en munissant le cordon d'une gorge en U ou en réalisant le collage par fusion superficielle du cordon sous l'effet de la chaleur.

Le cordon en matière thermofusible renfermant l'insert métallique peut être réalisé facilement par extrusion, étant donné que le cordon présente une section constante tout autour du vitrage, ou par moulage ou surmoulage directement sur la périphérie du vitrage.

Ce cordon peut être en polymère d'éthyl vinyl acétate, en polymère d'éthylène éthyl acrylate, en polyéther-polyamide, en polyuréthane linéaire ou réalisé par un mélange de deux ou plusieurs de ces composés.

Selon un autre aspect de l'invention, le procédé pour la fabrication d'un vitrage prêt à sa pose et à sa fixation dans un cadre rigide, ce vitrage portant sur sa périphérie un cordon de collage en matière plastique thermofusible renfermant un insert métallique permettant le chauffage par effet Joule de ce cordon, est caractérisé par les étapes suivantes :

-on réalise par extrusion ou moulage un cordon de collage en matière thermofusible préformé présentant sur l'un de ses côtés un évidement destiné à recevoir le bord extérieur du vitrage, la section transversale de ce cordon étant telle qu'au moins la partie dudit cordon qui est destinée à recouvrir le bord extérieur du vitrage remplisse, lors de la pose de celui-ci dans le cadre rigide, sensiblement tout l'espace compris entre le bord extérieur du vitrage et le cadre rigide,

-on engage l'évidement du cordon de collage préformé sur le bord extérieur du vitrage,

-on fixe le cordon de collage au bord extérieur du vitrage et de façon en elle-même connue,

-on pose le vitrage comportant à sa périphérie le cordon de collage dans le cadre rigide, on relie l'insert métallique noyé dans le cordon à une source de courant électrique pour chauffer ledit cordon et, après ramollissement du cordon, on presse sur le vitrage.

Selon une version préférée de l'invention, pour fixer le cordon de collage au bord extérieur du vitrage, on place le cordon préformé dans une gouttière métallique refroidie entourant complètement le cordon à l'exception de la partie de celui-ci qui présente l'évidement, on place le bord extérieur du vitrage dans l'évidement du cordon et on chauffe localement la périphérie du verre dans la zone adjacente à l'évidement du cordon pour faire fondre superficiellement la matière dudit cordon.

D'autres particularités et avantages de l'invention apparaîtront encore dans la description ci-après.

Aux dessins annexés donnés à titre d'exemples non limitatifs :

- la figure 1 est une vue en coupe longitudinale partielle d'un vitrage portant un cordon de collage conforme à l'invention,

- la figure 2 est une vue en coupe suivant le plan II-II de la figure 1,

- la figure 3 est une vue montrant le vitrage et son cordon fixés dans un cadre rigide,

- la figure 4 est une vue analogue à la figure 1 concernant une variante de réalisation,

- la figure 5 est une vue analogue à la figure 1 concernant une deuxième variante de réalisation,

- la figure 6 est une vue analogue à la figure 1 concernant une troisième variante de réalisatin,

- la figure 7 est une vue illustrant une étape du procédé de fabrication de la variante de réalisation selon la figure 4,

- la figure 8 est une vue illustrant la fabrication du cordon de collage par moulage.

- la figure 9 est une vue en plan d'une variante d'insert métallique.

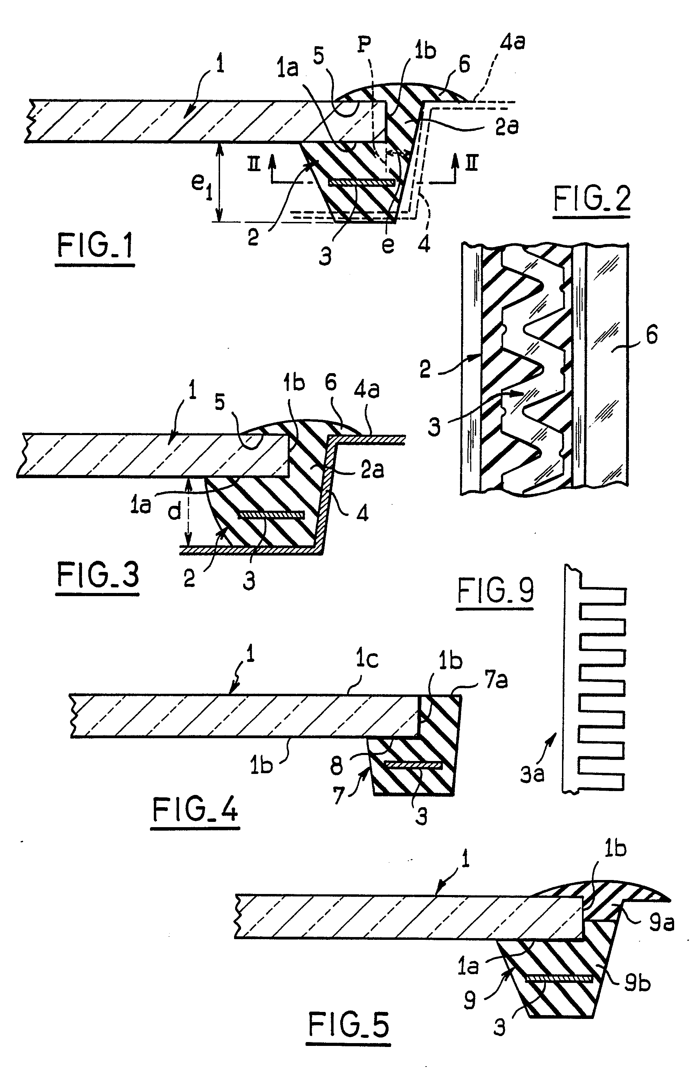

Dans la réalisation de la figure 1, le vitrage 1 par exemple pour pare-brise ou lunette arrière d'automobile porte sur sa périphérie un cordon 2 de collage en matière plastique thermofusible renfermant un insert métallique 3 (voir également la figure 2) permettant le chauffage par effet Joule de ce cordon 2. Ce cordon 2 permet la fixation du vitrage 1, par collage sur un cadre rigide 4 (voir figure 3) entourant par exemple la baie d'une automobile.

Le cordon de collage 2 en matière plastique thermofusible recouvre à la fois la face interne 1a et le bord extérieur 1b du vitrage 1. De plus, ce cordon 1 est préformé de façon qu'au moins la partie 2a du cordon qui recouvre le bord extérieur 1b du vitrage 1 remplisse lors de la pose de celui-ci dans le cadre rigide 4 (voir figure 3) sensiblement tout l'espace compris entre le bord extérieur 1b du vitrage 1 et le cadre rigide 4.

Dans l'exemple représenté (voir figure 2), l'insert métallique 3 est une fine bande en métal résistif découpée en zig-zag. Cette disposition permet de plier le cordon 2 à angle droit autour des coins du vitrage 1.

L'épaisseur $e$ de la partie du cordon 2 en matière thermofusible, située sous la face inférieure 1a du vitrage 1, mesurée à partir d'un plan P passant par le bord extérieur 1b du vitrage 1 est légèrement inférieure à la distance comprise entre ce bord extérieur 1b du vitrage et le cadre rigide 4. Par ailleurs, l'épaisseur e, de cette partie du cordon 2 située sous la face inférieure 1a du vitrage mesurée à partir de celle-ci est supérieure à la distance $d$ comprise entre cette face inférieure 1a du vitrage et le cadre rigide 4 lorsque ce vitrage est définitivement fixé dans ce cadre, comme indiqué sur la figure 3.

La partie du cordon 2 située sous la face intérieure 1a du vitrage 1 a une section sensiblement trapézoïdale, la petite base de cette section étant opposée au vitrage 1 et sensiblement parallèle à celui-ci.

Le cordon de collage 2 peut être réalisé par extrusion, étant donné que la section de ce cordon est constante tout autour du vitrage. L'insert métallique 3 noyé dans la matière thermofusible peut être extrudé en même temps que cette dernière.

Le cordon de collage 2 peut également être réalisé par moulage.

Dans la réalisation représentée sur les figures 1 à 3, la partie supérieure du cordon 2 comporte une gorge 5 de section en U qui est emboîtée sur le bord extérieur 1b du vitrage 1. Ce mode de fixation est uniquement mécanique et ne nécessite par conséquent aucun collage. La partie supérieure du cordon 2 présente également un rebord 6 qui est destiné à recouvrir le bord extérieur 4a du cadre rigide 4, comme indiqué sur la figure 3.

Lorsque le cordon de collage 2 est fixé à la périphérie du vitrage 1, celui-ci est prêt pour la pose. A cet effet, il suffit de placer le vitrage 1 et son cordon périphérique 2 dans le cadre métallique 4, puis de relier l'insert métallique 3 à une source appropriée de courant électrique pour chauffer la matière thermofusible du cordon 2. Après ramollissement de cette dernière, on presse sur le vitrage 1 jusqu'à ce que le rebord 6 du cordon prenne appui sur le bord extérieur 4a du cadre 4. Du fait de cette pression, la partie inférieure du cordon 2 s'écrase et remplit tout l'espace compris entre son bord et le cadre 4.

Ainsi, aucun joint de finition supplémentaire n'est nécessaire pour solidariser le cordon 2 au bord du vitrage 1 ou pour remplir l'espace compris entre ce cordon et le cadre rigide 4.

Dans la réalisation de la figure 4, la partie supérieure du cordon 7 comporte un épaulement ou évidement 8 dont les deux faces perpendiculaires sont collées sur le bord extérieur 1b et la face interne 1a du vitrage 1.

Le bord supérieur 7a de ce cordon 7 est disposé dans le prolongement de la face extérieure 1c du vitrage 1 qui est elle-même destinée à être située dans le prolongement du bord extérieur 4a du cadre rigide 4.

Comme dans le cas de la réalisation selon les figures 1 à 3, la largeur du bord supérieur 7a du cordon 7 est telle que la partie supérieure du cordon 7 remplisse, lors de la pose du vitrage dans le cadre rigide 4, sensiblement tout l'espace compris entre le bord extérieur 1b du vitrage et le cadre rigide 4.

Le cordon de collage 2 ou 7 peut être en polymère d'éthyl vinyl acétate, en polymère d'éthylène vinyle acrylate, en polyéther-polyamide, en polyuréthane linéaire ou réalisé par un mélange de deux ou plusieurs de ces composés.

Ces matières plastiques thermofusibles répondent aux normes en vigueur aussi bien pour la qualité des joints de finition que pour celles des adhésifs utilisés dans le collage des vitrages sur les baies des automobiles.

Ces matières plastiques permettent d'obtenir une adhérence au verre et au métal supérieure à 30 DaN/cm² entre -40°C et 20°C et supérieure à 5 DaN/cm² à 80°C. De plus, ces matières ne subissent aucun fluage, ni aucun tachage permanent par la poussière à 130°C.

On donne ci-après un exemple de composition de la matière thermofusible du cordon de collage selon l'invention :

- Résine polyuréthane à base de polycaprolactone commercialisée par la société QUINN......45%

- Vistanex LMMS commercialisé par la société ESSO Chimie......20%

- Copolymère d'éthyl-vinyl acétate, tel que de l'EPVAX 220 commercialisé par la société DU PONT de NEMOURS......15%

- Résine Terpène-phénol (Thermophène T de la société DRT)......12%

- Noir de carbone......8%

Dans la réalisation de la figure 5, le cordon de collage 9 est identique à celui représenté sur la figure 1, excepté que la partie supérieure 9a adjacente au vitrage 1 est en matière plastique thermofusible différente de celle de la partie inférieure 9b. Ces deux matières sont compatibles entre elles et soudées l'une à l'autre. Ces deux parties 9a, 9b peuvent être extrudées en même temps.

De cette façon, la partie supérieure 9a du cordon remplit mieux sa fonction de joint de finition qui exige une certaine dureté, tandis que la partie inférieure 9b remplit de façon optimale sa fonction d'adhérence au cadre rigide 4 qui implique que cette partie puisse se ramollir et s'écraser lors de la pose pour épouser la forme du cadre rigide 4.

On donne ci-après un exemple non limitatif pour les compositions des parties 9a et 9b ci-dessus.

Partie 9a Résine polyuréthane (QUINN)..............55 %
Vistanex LMMS ESSO-CHIMIE................20 %
EVA type EPVAX 220 (DUPONT DE NEMOURS)-....5 %
Résine Terpène-phénol (Termophène T)......8 %
Noir de carbone.........................12 %

Partie 9b Résine polyuréthane (QUINN)..............12 %
Vistanex LMMS............................10 %
EVA type EPVAX 220......................25 %
Terpolymère EEA type 3200
Marque LOTADER de CDF chimie.............28 %
Résine terpène-phénol....................20 %
Noir de carbone .........................5 %

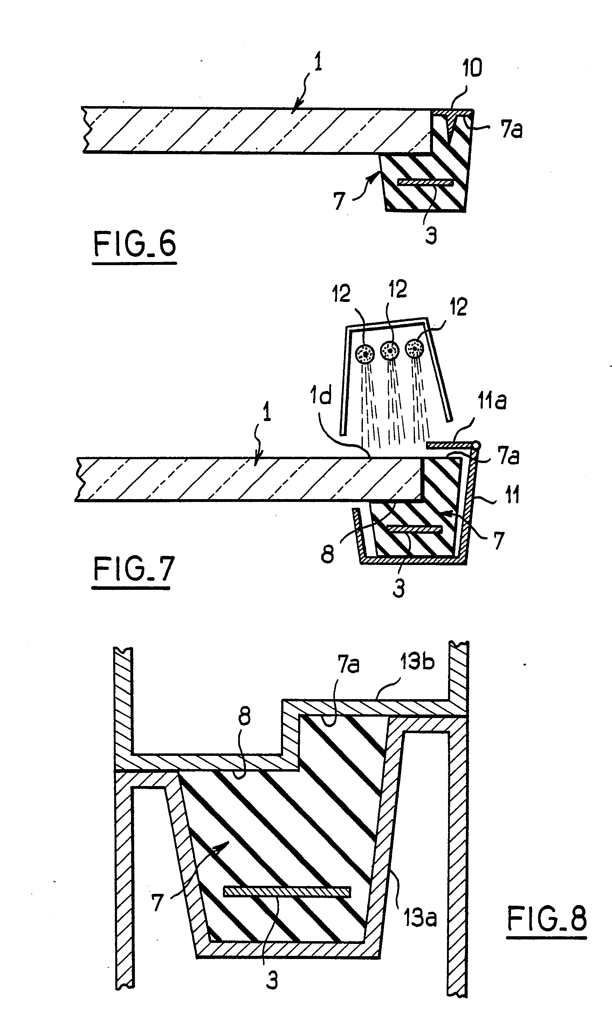

Dans la réalisation selon la figure 6, le cordon de collage 7 est identique à celui représenté sur la figure 4, excepté que son bord supérieur 7a est recouvert par une plaque décorative 10 en métal ou autre.

Pour fabriquer un vitrage prêt à la pose selon l'invention, on procède par exemple de la façon suivant :

On réalise par extrusion ou moulage un cordon de collage 2 (voir figure 1) en matière thermofusible préformé présentant sur l'un de ses côtés un évidement ou gorge 5 destiné à recevoir le bord extérieur 1a du vitrage 1, la section transversale de ce cordon 2 étant telle qu'au moins la partie 2a dudit cordon qui est destinée à recouvrir le bord extérieur 1b vitrage remplisse, lors de la pose de celui-ci dans le cadre rigide 4, sensiblement tout l'espace compris entre le bord extérieur 1b du vitrage et le cadre rigide 4.

On engage ensuite la gorge 5 du cordon de collage préformé 2 sur le bord extérieur 1b du vitrage de façon à fixer mécaniquement le cordon de collage au bord extérieur du vitrage 1.

On pose le vitrage 1 comportant à sa périphérie le cordon de collage 2, dans le cadre rigide 4 (voir figure 3), on relie l'insert métallique 3 noyé dans le cordon 2 à une source de courant électrique pour chauffer le cordon 2 et après ramollissement de celui-ci on presse sur le vitrage.

Dans l'exemple représenté sur la figure 7, pour fixer le cordon de collage 7 au bord extérieur 1b du vitrage, on place le cordon préformé 7 dans une gouttière métallique 11 refroidie entourant complètement le cordon 7 à l'exception de la partie de celui-ci qui présente l'évidement 8.

On place ensuite le bord extérieur 1b du vitrage 1 dans l'évidement 8 du cordon 7 et on chauffe localement la périphérie du verre 1 au moyen de tubes infrarouges 12 dans la zone 1d adjacente à l'évidement 8 du cordon pour faire fondre superficiellement la matière dudit cordon. On obtient ainsi un collage efficace entre le cordon 7 et le vitrage 1. Le fait que la gouttière 11 soit refroidie permet d'éviter tout ramollissement et déformation de l'ensemble du cordon préformé 7.

Cette gouttière 11 est munie d'un volet articulé 11a qui est rabattu sur le bord supérieur 7a du cordon pour éviter l'échauffement de celui-ci.

Lors de cette opération, on peut également fixer sur le bord extérieur 7a du cordon 7, la plaque décorative 10 représentée sur la figure 6.

Un cordon de collage tel que celui représenté sur la figure 4 peut bien entendu également être réalisé par moulage.

On utilise à cet effet (voir figure 8) un moule en deux parties 13a, 13b adaptées à la section du cordon 7 que l'on veut réaliser. On injecte au fond de la partie 13a du moule, une certaine quantité de matière thermofusible, puis on place l'insert métallique 3 et on complète l'injection de matière thermofusible.

L'utilisation de l'insert métallique comme moyen de ramollissement de la colle par effet Joule n'est pas exclusive. En effet, pour accélérer le temps de pose du vitrage sur les chaînes de montage, des moyens complémentaires de chauffage peuvent être utilisés, tel que l'Air chaud, les Infra Rouges etc. Le ramollissement de la colle peut même être amorcé hors chaîne, dans le temps masqué, pour limiter le temps de pose sur chaîne à moins d'une minute.

Par ailleurs, la forme de l'insert métallique 3 représenté sur la figure 2 peut être modifiée. Ainsi la figure 9 illustre un insert métallique 3a en forme de peigne.

## Revendications

1. Vitrage (1) portant sur sa périphérie un cordon de collage (2, 7, 9) en matière plastique thermofusible permettant la fixation du vitrage (1) sur un cadre rigide (4), caractérisé en ce que le cordon de collage (2, 7, 9) en matière plastique thermofusible recouvre à la fois la face interne (1a) et le bord extérieur (1b) du vitrage (1) et en ce que ce cordon (2, 7, 9) est préformé de façon qu'au moins la partie dudit cordon qui recouvre le bord extérieur (1b) du vitrage, remplisse lors de la pose de celui-ci dans le cadre rigide (4), sensiblement tout l'espace compris entre le bord extérieur (1b) du vitrage et ce cadre rigide (4).

2. Vitrage conforme à la revendication 1, caractérisé en ce que le cordon de collage renferme un insert métallique (3) permettant le chauffage par effet Joule de ce cordon.

3. Vitrage conforme à l'une des revendications 1 ou 2, caractérisé en ce que l'épaisseur (e) de la partie du cordon en matière thermofusible (2), située sous la face inférieure (1a) du vitrage (1) mesurée à partir d'un plan (P) passant par le bord extérieur (1b) du vitrage est légérement inférieure à la distance comprise entre ce bord extérieur (1b) du vitrage et le cadre rigide (4) et en ce que l'épaisseur (e₁) de cette partie du cordon située sous la face inférieure du vitrage mesurée à partir de celle-ci est supérieure à la distance (d) comprise entre cette face inférieure (1a) du vitrage et le cadre rigide (4).

4. Vitrage conforme à l'une des revendications 1 à 3, caractérisé en ce que la partie du cordon (2, 7, 9) située sous la face intérieure (1a) du vitrage a une section sensiblement trapézoïdale, la petite base de cette section étant opposée au vitrage (1) et sensiblement parallèle à celui-ci.

5. Vitrage conforme à l'une des revendications 1 à 4, caractérisé en ce que le cordon (2, 7, 9) est obtenu par extrusion.

6. Vitrage conforme à l'une des revendications 1 à 5, caractérisé en ce que le cordon (2, 7, 9) est obtenu par moulage.

7. Vitrage conforme à l'une des revendications 1 à 6, caractérisé en ce que la partie supérieure (2a) du cordon (2) comporte une gorge (5) de section en U qui est emboîtée sur le bord extérieur (1b) du vitrage.

8. Vitrage conforme à l'une des revendications 1 à 6, caractérisé en ce que la partie supérieure du cordon (7) comporte un épaulement (8) dont les faces sont collées sur le bord extérieur (1b) et la face interne (1a) du vitrage (1).

9. Vitrage conforme à l'une des revendications 1 à 8, caractérisé en ce que le cordon (2, 7, 9) est en polymère d'éthyl vinyl acétate, en polymère d'éthylène éthyl acrylate, en polyéther-polyamide, en polyuréthane linéaire ou réalisé par un mélange de deux ou plusieurs de ces composés.

10. Vitrage conforme à l'une des revendications 1 à 9, caractérisé en ce que la partie supérieure (9a) du cordon (9) adjacente au vitrage est en matière plastique thermofusible présentant une dureté plus grande que celle constituant la partie inférieure (9b) du cordon.

11. Procédé pour la fabrication d'un vitrage (1) prêt à se pose et à sa fixation dans un cadre rigide, ce vitrage portant sur sa périphérie un cordon de collage (2, 7, 9) en matière plastique thermofusible renfermant un insert métallique (3) permettant le chauffage par effet Joule de ce cordon, ce procédé étant caractérisé par les étapes suivantes :

-on réalise par extrusion ou moulage un cordon de collage en matière thermofusible préformé présentant sur l'un de ses côtés, un évidement (5, 8) destiné à recevoir le bord extérieur (1b) du vitrage (1), la section transversale de ce cordon étant telle qu'au moins la partie dudit cordon qui est destinée à recouvrir le bord extérieur (1b) du vitrage remplisse, lors de la pose de celui-ci dans le cadre rigide (4), sensiblement tout l'espace compris entre le bord extérieur (1b) du vitrage et le cadre rigide (4),

-on engage l'évidement (5, 8) du cordon de collage préformé sur le bord extérieur (1b) du vitrage,

-on fixe le cordon de collage au bord extérieur du vitrage et de façon en elle-même connue,

-on pose le vitrage (1) comportant à sa périphérie le cordon de collage (2, 7, 9), dans le cadre rigide (4), on relie l'insert métallique 93) noyé dans le cordon à une source de courant électrique pour chauffer ledit cordon et après ramollissement du cordon on presse sur le vitrage (1).

12. Procédé conforme à la revendication 11, caractérisé en ce que pour fixer le cordon de collage (7) au bord extérieur (1b) du vitrage (1), on place le cordon préformé (7) dans une gouttière métallique (11) refroidie entourant complètement le cordon à l'exception de la partie de celui-ci qui présente l'évidement (8), on place le bord extérieur (1b) du vitrage dans l'évidement (8) du cordon et on chauffe localement la périphérie du verre dans la zone (1d) adjacente à l'évidement (8) du cordon pour faire fondre superficiellement la matière dudit cordon.

FIG_1

FIG_2

FIG_3

FIG_4

FIG_5

FIG_9

FIG_6

FIG_7

FIG_8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | FR-A-2 088 158  (MESNEL) <br> * Page 2, ligne 39 - page 3, ligne 14; page 4, lignes 22-31; figures 1,5,6 * <br> --- | 1,2,5, 11 | B 60 R  13/06 |
| X | US-A-4 115 609  (DENMAN) <br> * Colonne 6, ligne 12 - colonne 7, ligne 61; figures 1-4 * <br> --- | 1,2,5, 11 | |
| Y | FR-A-1 578 033  (UNITED SHOE) <br> * Page 4, lignes 3-43; figures 1-4 * | 1 | |
| A | | 5 | |
| | --- | | |
| Y | FR-A-2 508 267  (SAINT-GOBAIN) <br> * Page 7, lignes 4-11; figure 2 * | 1 | |
| A | | 2,11 | |
| | --- | | |
| A | GB-A-1 233 542  (BITUMEN IND.) <br> * Page 3, ligne 100 - page 4, ligne 14; figures 1,2 * <br> ----- | 1 | |

| | DOMAINES TECHNIQUES RECHERCHES (Int. Cl.4) |
|---|---|
| | B 60 R |

Le présent rapport a été établi pour toutes les revendications

| Lieu de la recherche | Date d'achèvement de la recherche | Examinateur |
|---|---|---|
| LA HAYE | 29-03-1988 | AYITER I. |